# EUROPEAN PATENT APPLICATION

(11) **EP 4 571 942 A1**
(43) Date of publication of application: **18.06.2025**
(21) Application number: 24218602.1
(22) Date of filing: 10.12.2024
(51) Int. Cl.: H01M 10/613, H01M 10/625, H01M 10/6556, H01M 50/204, H01M 50/238, H01M 50/242, H01M 50/249

(54) **CARRIER UNIT FOR A BATTERY MODULE**

(30) Priority: 15.12.2023 US 202318541032
(71) Applicant: Volvo Car Corporation, 405 31 Göteborg (SE)
(72) Inventor: PERSSON, Klas, 40531 Göteborg (SE); STRÖM, Sven, 40531 Göteborg (SE); KARLSSON, Daniel, 40531 Göteborg (SE); FÄLLMAR, Magnus, 40531 Göteborg (SE)
(74) Representative: Maiwald GmbH

(57) **Abstract**

The disclosure relates to carrier unit (10) for a battery module (30), the carrier unit (10) comprising a bottom portion (11) configured to carry at least one row (20) of battery cells (21); and two side portions (14) configured to accommodate the at least one row (20) of battery cells (21) in a space formed between the two side portions (14); the carrier unit (10) being at least partially flexible.

## Description

### TECHNICAL FIELD

The present disclosure relates to a carrier unit for a battery module, a battery module, a battery pack, and a vehicle.

### BACKGROUND ART

At least in non stationary applications, such as vehicles, a high energy density and low weight of battery packs is desirable. While many concepts exist to achieve this, there is still a need for further improvement in increasing the energy density and decreasing the weight of battery packs.

### SUMMARY

The problem is at least partially solved or alleviated by the subject matter of the independent claims of the present disclosure, wherein further examples are incorporated in the dependent claims.

According to a first aspect, there is provided a carrier unit for a battery module. The carrier unit comprises a bottom portion configured to carry at least one row of battery cells. Further, the carrier unit comprises two side portions configured to accommodate the at least one row of battery cells in a space formed between the two side portions. The carrier unit may be at least partially flexible.

The carrier unit may be part of a battery module, in particular of a battery pack, comprising the battery cells. Multiple of these battery modules may be utilized in the battery pack. Accordingly, the carrier unit serves the purpose to carry the at least one row of battery cells inside the battery pack for each battery module. Designing the carrier unit at least partially flexible allows to provide for an at least partially flexible carrier unit, which can react to forces from inside the space formed between the side portions, e.g., resulting from a battery swelling, as well as from outside the side portions, if needed. At least partially flexible may refer to zones of the bottom portion and the side portions or to the bottom portion and/or the side portions. Hence, the bottom portion and/or the side portions may be flexible. Generally, the carrier unit may be at least partially flexible such that it is deformable, e.g., lengthening and/or bending of the carrier unit, in particular the bottom portion and/or the side portions as such or with respect to one another, in particular when the battery cells are swelling and applying from inside the space onto the side portions. The carrier unit may be at least partially flexible such that it is deformable elastically and/or plastically. Thereby, the carrier unit may, besides serving the purpose of carrying the battery cells of a battery module and an advantageous modular design of the battery pack as will be described in more detail below, also provide flexibility between the battery cells and their attachment inside the battery pack, e.g., to a housing component or battery tray, of the battery pack.

The bottom portion may be configured for carrying the at least one row of battery cells. For example, it may comprise a sufficiently stiff material design to carry the weight of the battery cells, which may yet be sufficiently flexible to allow for a deformation, e.g., lengthening and/or bending, based on forces from a swelling of the battery cells. For example, a thermal interface material may be disposed on the bottom portion, allowing for a heat transfer from the battery cells into the bottom portion. The bottom portion may comprise one or more plates or sheets of material, e.g., metal, for example.

The side portions may be configured for accommodating the at least one row of battery cells in the space formed between the two side portions. For example, the space may be sufficiently large or long in the direction of the extension of the row to accommodate or, in other words, for arranging the battery cells arranged in their row in between the side portions. Further, for example, the side portions may have an extension in height corresponding to at least 30%, in particular at least 50% and further in particular at least 70% of a height of at least one, the outermost, most or all of the battery cells of the row. The height may be measured in a direction perpendicular to the bottom portion, for example. The side portions may be made from a solid piece of material, for example. They may be made from one material or a mix of materials, e.g., one or more metals. For example, the side portions may have the shape of solid plates or sheets. Optionally, the side portions may have recesses, e.g., in the form of slits. Thereby, an optimized force transfer resulting from a swelling of the battery cells during a lifetime of the battery cells via the surface shared between the outermost battery cells in the row of battery cells and the side portions may be allowed. In particular, the side portions may be located or arranged at opposite ends of the bottom portion. The side portions may be extending substantially perpendicular in their height relative to the bottom portion, in particular a planar extension or surface thereof. The side portions may be, in particular directly, connected to the bottom portion at these ends. In particular, the side portions and the bottom portion may be made from the same material, and in particular made from one piece or, in other words, as an integral design.

In the row of battery cells, the battery cells may be electrically connected to one another, e.g., in series. The battery module may comprise one or more electrical connectors, e.g., a bus bar system, which may further connect to one or more electrical connectors or systems of the battery pack, e.g., a battery management system. The battery cells may be of any design, e.g., prismatic, pouch, etc. The battery cells may be of any battery technology such as but not limited to lithium-ion technology. In particular, the row of battery cells may be fixed between the two side portions when inserted inside the space. For example, the battery cells may be (slightly) press fitted in between the two side portions such that the battery cells are fitted under tension in the space between the side portions. Besides the battery cells themselves, spacers between the side portions and the outermost battery cells may be placed. Further, or alternatively, battery pads, e.g., comprising a compressible material, may be placed in between adjacent battery cells. Such battery pads may at least partially compensate for the swelling of battery cells.

In an example, the carrier unit may be at least partially flexible for deformation of the carrier unit due to swelling of the battery cells. In other words, the carrier unit may be configured deformable, in particular due to it being at least partially flexible, when the battery cells of the row of battery cells are swelling, e.g., in a direction along the extension of the row of the battery cells. The extension of the row of the battery cells may be along a length of the row of battery cells. Alternatively, or additionally, the extension of the row of the battery cells may be along a stacking of the battery cells in the row. The phenomenon of swelling battery cells may occur during the life of the battery cells. The swelling of the battery cells may be resulting in a force of adj acent battery cells along the row of battery cells, effectively extending the length of the row of battery cells. The side portions at the ends or outermost battery cells of the row of battery cells may be receiving the force and be deformed as they and/or the bottom portion may be at least partially flexible. Thereby, the side portions may transmit the forces further to a counter attachment portion inside the battery pack, to which the carrier unit, in particular the side portions, may be attached. The counter attachment portion may be part of a housing or housing structure, in particular of a bottom segment of the battery pack, e.g., of a battery tray. Accordingly, the carrier unit may be designed with a low weight and compact, while the forces from the swelling may still be dealt with by a rigid or at least more rigid structure as the carrier unit, e.g., by the counter attachment portion inside the battery pack. For example, the counter attachment portion may be formed as on or multiple walls, the thickness of which may be larger, in particular by a factor of at least 2, 3, 4 or more, than the thickness of each one of the side portions.

In an example, the at least the two side portions may be flexible with respect to the bottom portion. In particular, the two side portions may be deformable with respect to the bottom portion. The two side portions may be plastically and/or elastically deformable. If the two side portions are plastically and elastically deformable, the side portions may first elastically deform and consequently plastically and/or further elastically deform. Accordingly, the two side portions may bend away from the bottom portion, to which they may be connected, thereby increasing an angle between the bottom portion and each one of the side portions. This flexibility enables a simple yet effective force transfer of the force resulting from the swelling of the battery cells while keeping the carrier unit lightweight and compact to achieve a high energy density and low weight of the battery pack. In addition, or alternatively, the bottom portion may be flexible with respect to the two side portions, e.g., for bending the bottom portion by means of the forces from swelling.

In an example, at least one of the bottom portion and the two side portions may have a thickness in the range of 0.5 mm to 6 mm, in particular in the range of 0.7 mm to 4 mm, further in particular in the range of 0.8 mm to 3 mm, more in particular in the range of 1 mm to 2 mm. In particular, the thickness may be a maximum thickness of the bottom portion and/or the side portions. The thickness may be distributed substantially uniform throughout the bottom portion and/or the side portions within the range, for example. The thickness may relate to a thickness of a, in particular single, sheet or layer of the bottom portion and/or side portion, e.g., comprising or made from metal.

In an example, the bottom portion and the two side portions may comprise a sheet (of material), the two side portions being bent with respect to the bottom portion. In particular, the two side portions may be bent with respect to the bottom portion in a substantially perpendicular angle between two side portions and the bottom portion. The sheet may be a single sheet of material, e.g., comprising or made from metal. A substantially perpendicular angle includes an angle in the range of 70° to 110°, in particular in the range of 80° to 100°, and moreover in particular in the range of 85° to 95°. The angle may in particular refer to the situation without swelling of the battery cells. However, the angle may substantially still be perpendicular within the above ranges even with swelling of the battery cells due to the design of the carrier unit and/or its attachment to the counter attachment portion inside the battery pack.

In an example, at least one of the bottom portion and the two side portions may comprise a metal sheet. In other words, at least one of the bottom portion and the two side portions may comprise a metal layer, sheet or plate. The layer, sheet or plate comprises metal. It may in particular be made from one or more metals.

In an example, the two side portions are located at opposite ends of the bottom portion. Accordingly, the carrier unit may be substantially U-shaped in its cross section. The cross section comprises the bottom portion and the side portions. Accordingly, the cross section is seen when the carrier unit is cut in a plane perpendicular to the bottom portion and the side portions. Thereby, the space formed between the two side portions may be limited downwards by the bottom portion and to the sides by the side portions. Upwards or the top of the carrier unit may be open such that the battery cells may be inserted or, in other words, accommodated therein as the row of battery cells between the side portions.

In an example, the bottom portion of the carrier unit may comprise at least one channel for transporting a cooling fluid for cooling the battery cells. Accordingly, the bottom portion may be formed as a heat sink for the battery module. The bottom portion may be actively cooled by transporting a cooling fluid through the one or more channels, in particular fluid channels. The cooling fluid may be water, for example. The cooling fluid may be circulated through a cooling system for cooling the cooling fluid. The at least one channel may be arranged in a meander shape, for example.

In an example, the at least one channel may be formed in between two sheets (of material) of the bottom portion. For example, one or both sheets of material may be depressed with respect to a plane of the sheet. The depression or depressions may be forming at least part, e.g., half, of the at least one channel, in particular in a direction of diameter of the at least one channel. The material of the sheets may be the same or different. For example, the material of the sheets may be one or more metals. The sheets may be attached to one another, e.g., by welding, soldering, or similar.

In an example, the carrier unit may further comprise a thermal interface material arranged on the bottom portion. The thermal interface material may be a thermally conductive paste, adhesive, material layer or similar for improving the heat transfer from the row of battery cells to the bottom portion of the carrier unit.

In an example, the carrier unit may comprise at least two attachment portions for suspending the carrier unit inside a battery pack. For example, one attachment portion may be located at or provided at each one of the side portions. For example, the attachment portions may be designed as lugs. The attachment portions may comprise a hole, which may be used for a bolt connection with the counter attachment portions of the battery pack, for example.

According to a second aspect of this disclosure, there is provided a battery module comprising the carrier unit of the first aspect of this disclosure and at least one row of battery cells. The at least one row of battery cells may be inserted or accommodated in the space between the two side portions of the carrier unit.

In an example, the carrier unit may comprise at least two adjacent rows of battery cells accommodated in the space between the two side portions of the carrier unit. It is also possible to accommodate more than two adjacent rows of battery cells, e.g., three or four or more rows of battery cells. One or more channel connector, e.g., for inflow of cooling fluid and for outflow of cooling fluid, may be disposed and connected to the at least one channel in between two adjacent rows of battery cells or in between two pairs of rows of battery cells, for example. Compared to a design of the carrier unit including only one row of battery cells, the carrier unit may accordingly carry multiple rows of battery cells and provide the advantageous effects discussed above with a single carrier unit, without requiring a separate carrier unit for every single row of battery cells. Further, one or more cooling channels may be shared by two or more adjacent rows of battery cells.

According to a third aspect of this disclosure, there is provided a battery pack for a vehicle, the battery pack comprising one battery module or at least two battery modules according to the second aspect of this disclosure.

In an example, the battery modules may be suspended inside the battery pack. In other words, the battery modules may be hanging inside the battery pack, in particular by means of their attachment via their attachment portions to the counter attachment portions of the battery pack. Still, on a side of the bottom portion opposite of the battery cells, i.e., underneath the bottom portion, one or more spacers may be provided, which space apart the bottom portion of the carrier unit from the bottom segment of the battery pack. These spacers may comprise or be made from a compressible material and/or a thermal interface material, for example. The two or more battery modules may be attached adjacently to one another. In particular, they may share one of the counter attachment portions for suspending both battery modules with their carrier units inside the battery pack.

According to a fourth aspect of this disclosure, there is provided a vehicle comprising the battery pack according to the third aspect of this disclosure.

It is noted that the above examples may be combined with each other irrespective of the aspect involved. For example, the battery pack and battery module may comprise the features mentioned with respect to the carrier unit and the other way around.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view of a battery module;
- Figure 2: shows a top view of the battery module of Fig. 1;
- Figure 3: shows perspective view of a carrier unit for the battery module of Figs. 1 and 2;
- Figure 4: shows a perspective view of another carrier unit for the battery module of Figs. 1 and 2;
- Figure 5: shows a bottom view of the carrier unit of Fig. 3 or 4;
- Figure 6: shows a cross sectional view of a battery pack having at least two battery modules of Fig. 1 or 2; and
- Figure 7: shows a schematic view of a vehicle having the battery pack of Fig. 6.

### DETAILED DESCRIPTION

The Figures are merely schematic representations and serve only to illustrate examples of the disclosure. Identical or equivalent elements are in principle provided with the same reference signs.

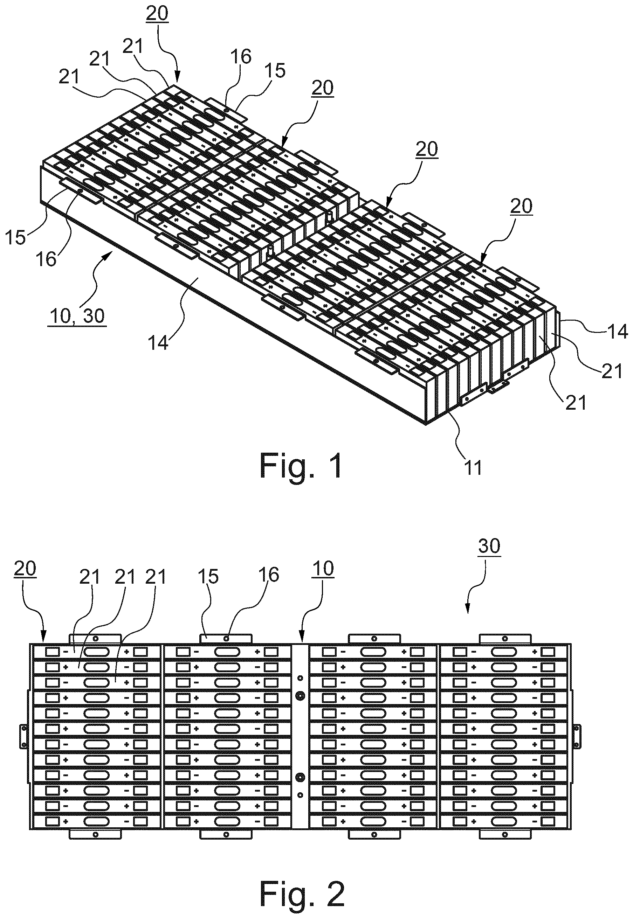

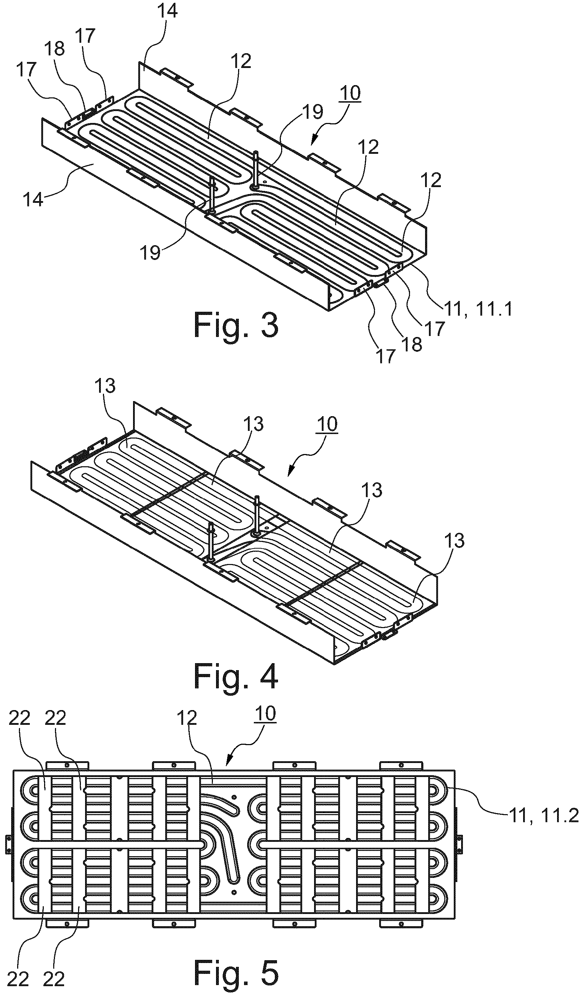

Figs. 1 and 2 show a battery module 30 comprising a carrier unit 10 and multiple battery cells 21 in a perspective view and a top view. Figs. 3 and 4 show different examples of the carrier unit 10 without the battery cells 21.

The carrier unit 10 comprises a bottom portion 11, on which the battery cells 21 are disposed and thereby carried. Further, the carrier unit 10 may comprise opposite side portions 14, which may be located at ends of the bottom portion 11 and/or may extend in height transverse to the bottom portion 11, in particular a plane thereof. Further, the side portions 14 may extend in a substantially perpendicular angle from the bottom portion 11. The side portions 14 and the bottom portion 11 may extend together along their length.

In this example, the battery module 30 comprises four adjacent rows 20 of battery cells 21, each one of these rows 20 being accommodated, in particular fitted, in between the opposite side portions 14, in particular in a space formed therebetween. When manufacturing the battery module 30, the battery cells 21 may be conveniently inserted into the space from the open top of the carrier unit 10. Note that the number of rows 20 of battery cells 21 may be less than four, e.g., three, two or one, or more, e.g., five or more. Accordingly, the carrier unit 10 may be designed shorter or longer.

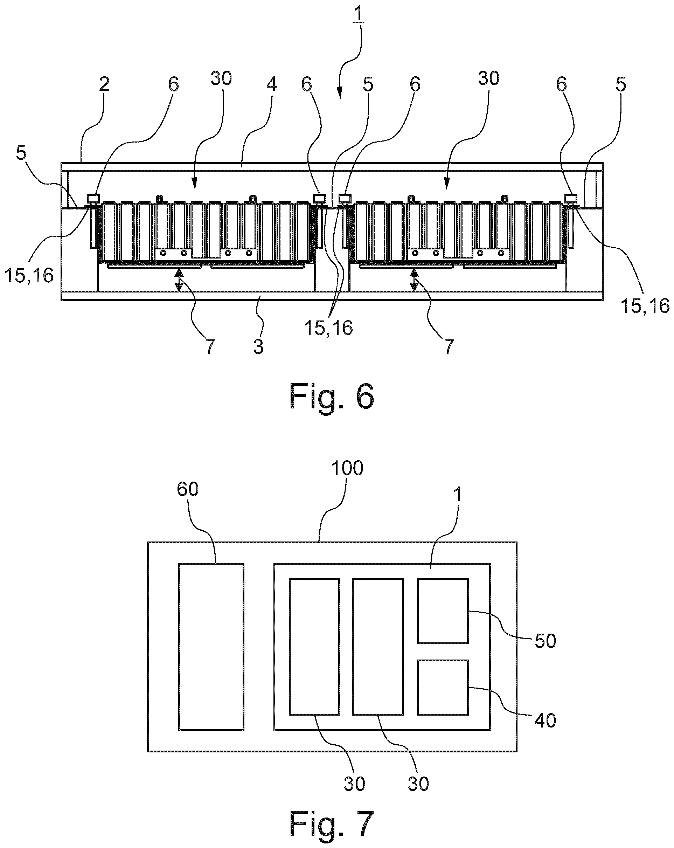

Attachment portions 15 of the carrier unit 10 are located opposite of one another for each row 20 of battery cells 21. They are exemplary configured herein as lugs with holes 16. The attachment portions 15 may extend away from the bottom portion 11. The attachment portions 15 are located at the opposite side portions 14, in particular at a top thereof. The attachment portions 15 may be used to suspend the battery module 30 inside a battery pack 1 such as the one exemplary shown in Fig. 6. However, alternatively, the carrier unit 10 or battery module 30 may be disposed or attached inside the battery pack 1 in a different way, e.g., by supporting the carrier unit 10 on pins or similar (not shown).

As may be seen from Figs. 3 and 4, at least the bottom portion 11 and the side portions 14 may be made from a single sheet, plate, or layer of material, e.g., one or more metals, such as aluminum, copper, steel, and similar, for example. Specifically, the side portions 14 may be bent with respect to the bottom portion 11, in particular in the substantially perpendicular angle described above. Similarly, the attachment portions 15, may be extending away from the side portions 14 in a substantially perpendicular angle to the side portions 14, in particular by being bent with respect to the side portions 14. The attachment portions 15 may also be from the same single sheet of material as the side portions 14 and the bottom portion 11. Alternatively, the respective portions 11, 14 and/or 15 may be separate and joined to one another, e.g., by a welding connection, for example. However, having the carrier unit 10 designed from a single sheet or plate of material enables for greater flexibility and prevents that the carrier unit 10 breaks at the joints when it is being loaded with forces, e.g., from a swelling of the battery cells 21.

Further, as may be seen from Fig. 3, the bottom portion 11 may comprise at least one or more channels 12 for transporting a cooling fluid, e.g., comprising water, from a cooling system 40 (see Fig. 7) therethrough for cooling the battery cells 21 accommodated in the carrier unit 10. For example, as may be seen from Fig. 4 and 5, the one or more channels 12 may be formed by or in between two sheets 11.1, 11.2 or plates, e.g., from metal, where a first sheet 11.1, in particular the top sheet 11.1, may be the one described above with respect to at least the bottom portion 11 and the side portions 14 being from a single sheet of material. The other one of these two sheets, i.e., the second sheet 11.2, which may be underneath the top sheet 11.1, may be joined, e.g., welded, to the top sheet 11.1. Both may be correspondingly depressed to form the at least one channel 12 when being joined with each other. As shown, the at least one channel 12 may have a meander shape. In particular, for the exemplary configuration of two pairs of adjacent rows 20 of battery cells 21, each one of a meander-shaped section of the at least one channel 12 may be configured to cool a pair of rows 20 of battery cells 21 as seen in Fig. 3 together with Figs. 1 and 2.

Further, there may be channel connectors 19 located between the two meander-shaped sections. These channel connectors 19 may be extending in height away from the bottom portion 11, e.g., in a substantially perpendicular angle. One of these channel connectors 19 may be connected to the cooling system 40 for inflow of cooling fluid from the cooling system 40, while the other one of these channel connectors 19 may be connected to the cooling system 40 for outflow of the cooling fluid to the cooling system 40, e.g., after the cooling fluid was circulated through the at least one channel 12 from the inflow channel connector 19 to the outflow channel connector 19.

Further, Fig. 3 shows an exemplary further attachment portion 17, which may be used for an attachment of the carrier unit 10 inside the battery pack 1 at the short sides or transverse to the attachment of the attachment portions 15. Further, Fig. 3 shows an exemplary handling means 18, exemplary shown herein as lugs, enabling better handling of the battery module 30 when inserting it in the battery pack 1.

Fig. 4 shows the carrier unit 10 of Fig. 3 with the difference that a thermal interface material 13 is provided on top of the bottom portion 11, in particular between the rows 20 of battery cells 21 and the bottom portion 11. As shown herein, a separate section of thermal interface material 13 may be provided for each one of the rows 20 of battery cells 21.

Fig. 5 shows the bottom of the carrier unit 10 of Figs. 3 and 4. In this example, the at least one channel 12 may be seen as optionally formed by the bottom sheet 11.2 of material of the two sheets 11.1, 11.2 of material that may together form the at least one channel 12 therebetween. Exemplary, a compressible material 22 is disposed on the bottom side of the carrier unit 10 opposite of the battery cells 21. The compressible material 22 is shown exemplary to be arranged at different sections of the bottom portion 11 and with different portions thereof, which are spaced apart from one another. The compressible material 22 may be configured with compressible or compressive properties so that the compressible material 22 may be compressed when the battery module 30 touches a bottom segment 3 of the battery pack 1 (see Fig. 6).

Fig. 6 shows the battery pack 1. Here, exemplary, two battery modules 30 are installed inside the battery pack 1. The battery pack 1 is exemplary shown with its housing 2, having a bottom segment 3 and/or a top segment 4. The bottom segment 3 may be configured as a battery tray, for example. The top segment 4 may be configured as a lid, for example. The battery pack 1, in particular its housing 2 or housing structure, further comprises counter attachment portions 5 for the attachment portions 15 of the carrier units 10 of the battery modules 30. The counter attachment portions 5 are herein exemplary configured as walls, e.g., side walls and/or internal walls, of the battery pack 1, in particular its housing 2. As can be seen, the counter attachment portions 5 are exemplary shown to be thicker than the side portions 14, which may be very thin, e.g., having a thickness in the range of 0.5 to 6 mm and thereby particularly flexible. The same may be the case with the bottom portion 11, in particular the two sheets 11.1, 11.2, which may comprise a thickness in the same range and thereby be flexible. The counter attachment portions 5 may be substantially rigid, e.g., not flexible, and/or compressible or non-compressible. Thereby, they may receive a force resulting from a swelling of the battery cells 21 without bending or similar. The attachment portions 15 are shown to be exemplary attached via bolts 6 or screws inserted into the counter attachment portions 5. The attachment portions 15 are disposed on or resting on the counter attachment portions 5. The bolts 6 or screws extend through the holes 16 inside the attachment portions 15.

For the counter attachment portion 5 designed as the internal wall in between two battery modules 30 of the battery pack 1, exemplary, two bolts 6 are being used. However, alternatively, a single bolt 6 may be used and the attachment portions 15 of the adjacent carrier units 10 may be arranged in an overlapping manner, the single bolt 6 extending through both holes 16 thereof and into the counter attachment portion 5.

Further, there may be a reinforcing structures (not shown), e.g., substantially having an L-shape, provided in between the bolts 6 or screws and the attachment portions 15 for reinforcing the attachment. The reinforcing structures may have a larger thickness than the attachment portions 15 and accordingly be substantially inflexible, i.e., not bend for reinforcing the attachment.

In Fig. 6, the battery modules 30 are shown to be suspended inside the battery pack 1. Accordingly, there is a clearance 7 between the bottom segment 3, e.g., battery tray, and the bottom portion 11 and/or the compressible material 22. The clearance 7 may be shown larger for illustrative purposes. In particular, there may be a clearance 7 between adjacent portions of compressible material 22 spacing apart the carrier unit 10 from the bottom segment 3.

In the battery pack 1, when the battery cells 21 are swelling in the respective rows 20, due to the flexibility of the carrier unit 10, in particular their side portions 14 with respect to the bottom portions 11, the forces from the swelling of the battery cells 21 may be transmitted via a small deformation of the side portions 14 towards the counter attachment portions 5. Additionally, or alternatively, the bottom portion 11 may be configured to bend towards the bottom segment 3 when the battery cells 21 are swelling due to its flexibility. Thereby, a small and compact design of a battery pack 1 with multiple battery modules 30, the battery cells 21 of which are being carried by the lightweight and flexible carrier unit 10, is provided, while the swelling of the battery cells 21 is being handled by the housing 2 or its structure of the battery pack 1, in particular by means of the counter attachment portions 5.

Fig. 7 schematically shows a vehicle 100, e.g., a motor vehicle, in particular passenger car, comprising the battery pack 1 of Fig. 6. The battery pack 1 is exemplary shown herein with two battery modules 30, although more than two battery modules 30 may be present. Further, the battery pack 1, inside or outside of the housing 2, may comprise the cooling system 40 and/or a battery management system 50. The battery management system 50 may be electrically connected to the battery cells 21 of each one of the battery modules 30, e.g., two bus bar systems thereof.

The vehicle 100 may be an electric vehicle. For example, it may further comprise an electric motor 60, which may be supplied with energy from the battery pack 1 for driving the vehicle 100.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: battery pack
- 2: housing
- 3: segment, bottom segment
- 4: top segment
- 5: further segment
- 6: fastening means
- 7: clearance
- 10: carrier unit
- 11: bottom portion
- 11.1: first sheet
- 11.2: second sheet
- 12: channel
- 13: thermal interface material
- 14: side portion
- 15: attachment portion
- 16: attachment means
- 17: further attachment portion
- 18: handling means
- 19: channel connector
- 20: row of battery cells
- 21: battery cell
- 22: compressible material
- 30: battery unit
- 40: cooling system
- 50: battery management system
- 60: electric motor
- 100: vehicle

## Claims

1. A carrier unit (10) for a battery module (30), the carrier unit (10) comprising:
- a bottom portion (11) configured to carry at least one row (20) of battery cells (21); and
- two side portions (14) configured to accommodate the at least one row (20) of battery cells (21) in a space formed between the two side portions (14);
the carrier unit (10) being at least partially flexible.

2. The carrier unit (10) of claim 1, the carrier unit (10) being at least partially flexible for deformation of the carrier unit (10) due to swelling of the battery cells (21).

3. The carrier unit (10) of claim 1 or 2, the at least the two side portions (14) being flexible with respect to the bottom portion (11).

4. The carrier unit (10) of any one of the previous claims, at least one of the bottom portion (11) and the two side portions (14) having a thickness in the range of 0.5 mm to 6 mm.

5. The carrier unit (10) of any one of the previous claims, the bottom portion (11) and the two side portions (14) comprising a sheet, the two side portions (14) being bent with respect to the bottom portion (11) in a substantially perpendicular angle between two side portions (14) and the bottom portion (11) is being formed.

6. The carrier unit (10) of any one of the previous claims, at least one of the bottom portion (11) and the two side portions (14) comprising a metal sheet.

7. The carrier unit (10) of any one of the previous claims, the two side portions (14) being located at opposite ends of the bottom portion (11).

8. The carrier unit (10) of any one of the previous claims, the bottom portion (11) of the carrier unit (10) comprising at least one channel (12) for transporting a cooling fluid for cooling the battery cells (21).

9. The carrier unit (10) of claim 8, the at least one channel (12) being formed in between two sheets of the bottom portion (11).

10. The carrier unit (10) of any one of the previous claims, the carrier unit (10) comprising at least two attachment portions (15) for suspending the carrier unit (10) inside a battery pack (1).

11. A battery module (30) comprising a carrier unit (10) according to any one of the previous claims and at least one row (20) of battery cells (21).

12. The battery module (30) of claim 11, the carrier unit (10) comprising at least two adjacent rows (20) of battery cells (21) accommodated in the space between the two side portions (14) of the carrier unit (10).

13. A battery pack (1) for a vehicle (100), the battery pack (1) comprising at least two battery modules (30) according to claim 11 or 12.

14. The battery pack (1) of claim 13, the battery modules (30) being suspended inside the battery pack (1).

15. A vehicle (100) comprising the battery pack (1) of claim 13 or 14.
